**Europäisches Patentamt**

**European Patent Office**

**Office européen des brevets**

(11) Veröffentlichungsnummer: **0 251 156 B1**

(12) **EUROPÄISCHE PATENTSCHRIFT**

(45) Veröffentlichungstag der Patentschrift: **27.11.91**

(51) Int. Cl.5: **B60K 41/24**

(21) Anmeldenummer: **87109019.7**

(22) Anmeldetag: **23.06.87**

(54) Kraftfahrzeugbremsanlage.

(30) Priorität: **24.06.86 DE 3621076**

(43) Veröffentlichungstag der Anmeldung:
**07.01.88 Patentblatt 88/01**

(45) Bekanntmachung des Hinweises auf die
Patenterteilung:
**27.11.91 Patentblatt 91/48**

(84) Benannte Vertragsstaaten:
**DE FR GB IT SE**

(56) Entgegenhaltungen:
**EP-A- 0 131 411**
**EP-A- 0 173 054**
**FR-A- 2 451 850**
**GB-A- 2 161 875**
**GB-A- 2 167 144**

(73) Patentinhaber: **Adam Opel Aktiengesellschaft**
**Bahnhofsplatz 1 Postfach 17 10**
**W-6090 Rüsselsheim(DE)**

(72) Erfinder: **Harth, Klaus**
**Wilhelm-Dienst-Strasse 25**
**W-6093 Flörsheim(DE)**
Erfinder: **Reck, Lothar, Ing. (grad.)**
**Keplerring 50**
**W-6090 Rüsselsheim(DE)**

(74) Vertreter: **Bergerin, Ralf, Dipl.-Ing. et al**
**Adam Opel Aktiengesellschaft Bahnhofplatz**
**1 Postfach 17 10**
**W-6090 Rüsselsheim(DE)**

## Beschreibung

Die Erfindung betrifft eine Kraftfahrzeugbremsanlage nach dem Oberbegriff des Patentanspruchs 1.

Bei einer derartigen bekannten Kraftfahrzeugbremsanlage ist eine elektromagnetisch betätigbare Bremsdruckhaltevorrichtung vorgesehen, die zwischen dem Hauptbremszylinder und den Radbremszylindern zumindest eines Bremskreises angeordnet ist. Um die Bremsdruckhaltevorrichtung einzuschalten sind ein manuell betätigbarer Tastschalter und ein in Reihe dazu geschalteter Kupplungsschalter vorgesehen, der bei getretenem Kupplungspedal, also bei ausgerückter Kupplung, geschlossen ist.

Will der Fahrer eines Kraftfahrzeugs mit dieser bekannten Kraftfahrzeugbremsanlage beim Anfahren an einer Steigung eine Anfahrhilfe erhalten, so muß er bei getretenem Kupplungspedal den Tastschalter betätigen, wodurch die Bremsdruckhaltevorrichtung aktiviert und ein an den entsprechenden Radbremszylindern erzeugter Bremsdruck auch noch nach Loslassen des Bremspedals aufrechterhalten wird.

Der Fahrer kann nun durch gleichzeitiges Treten des Gaspedals und Loslassen des Kupplungspedals in üblicher Weise anfahren.

Dabei wird die Aktivierung der Bremsdruckhaltevorrichtung dadurch beendet und der Abbau des Bremsdrucks in den jeweiligen Radbremszylindern ermöglicht, daß der Kupplungsschalter in Abhängigkeit vom Kupplungsweg öffnet, sobald der Kupplungspunkt, an dem die Vortriebskraft gleich der Hangabtriebskraft ist, erreicht ist.

Hierbei ist es nun von Nachteil, daß das Kupplungspedal während einer längeren Haltephase getreten sein muß, da sonst die Bremsdruckhaltevorrichtung abgeschaltet wird. Ein unüberlegtes Loslassen des Kupplungspedals führt somit zu einem Abbau des Bremsdrucks an den Radbremszylindern, so daß ein Rückwärtsrollen des Kraftfahrzeugs die Folge ist, was insbesondere beim Halt in einer Fahrzeugkolonne zu einer Verkehrsgefährdung führt.

Ein weiterer Nachteil besteht darin, daß der Kupplungsschalter stets genau auf den Kupplungspunkt eingestellt sein muß, da die Bremsdruckhaltevorrichtung sonst zu früh oder zu spät abgeschaltet wird. Da sich der Kupplungspunkt aber infolge der Abnutzung der Kupplungsbeläge ändert, wird ein aufwendiges Nachjustieren des Kupplungsschalters erforderlich.

Es ist auch bereits vorgeschlagen worden, den manuellen Tastschalter durch eine automatische Fühlervorrichtung zu ersetzen, die erkennt, daß das Kraftfahrzeug in einer Steigung geneigt stillsteht, und daraufhin einen entsprechenden Schalter schließt, so daß durch Betätigung des Kupplungspedals die Bremsdruckhaltevorrichtung eingeschaltet wird. Das Abschalten erfolgt aber wieder über den Kupplungsschalter.

Abgesehen von einem erheblichen schaltungstechnischen Aufwand besitzt diese Kraftfahrzeugbremsanlage mit automatischer Fühlervorrichtung neben den oben beschriebenen Nachteilen den Mangel, daß Fehlfunktionen auftreten können, so daß z.B. bei blockierenden Rädern auf Glatteis die Bremsdruckhaltevorrichtung eingeschaltet und ein Lösen der Bremsen verhindert wird, da die Fühlervorrichtung einen vermeintlichen Stillstand des Fahrzeugs an einer Steigung erfaßt.

Bei einer anderen bekannten Kraftfahrzeugbremsanlage ist eine mechanische Bremsdruckhaltevorrichtung vorgesehen, die ein Druckhalteventil aufweist, in welchem eine frei rollende Stahlkugel in einem geneigten Ventilgehäuse als Schließkörper des Druckhalteventils wirkt, wobei die Stahlkugel nur dann das Druckhalteventil schließen kann, wenn die Kupplung ausgerückt ist. Ein mit der Kupplung wirkverbundenes Gestänge verhindert bei eingerückter Kupplung, daß die Stahlkugel das Druckhalteventil schließt. Auch bei dieser Bremsanlage hängt die exakte Funktion von der richtigen Einstellung auf den Kupplungspunkt ab.

Schließlich ist aus der EP-A-01 31 411 eine gattungsgemäße Kraftfahrzeugbremsanlage bekannt, bei der eine Bremsdruckhaltevorrichtung im wesentlichen in Abhängigkeit vom Kupplungsweg abgeschaltet wird. Zu diesem Zweck müssen eine Reihe von Meßsignalen erfaßt und gespeichert werden, insbesondere muß der Kupplungspunkt als Längenmaß des Kupplungsweges bei jeder Fahrt unter Berücksichtigung der Motor- und Getriebedrehzahl neu ermittelt und gespeichert werden. Der damit verbundene Aufwand ist außerordentlich hoch. Auch bei dieser bekannten Bremsanlage können Fehlfunktionen wie das Ansprechen der Bremsdruckhaltevorrichtung bei einem Bremsvorgang mit auf Glatteis blockierenden Rädern nicht ausgeschlossen werden.

Der Erfindung liegt nun die Aufgabe zugrunde, eine Kraftfahrzeugbremsanlage der eingangs genannten Art zu schaffen, die bei größtmöglicher Funktionssicherheit einfach aufgebaut und von der Lage des Kupplungspunktes einer zwischen dem Fahrzeugmotor und der Antriebswelle wirkenden Kupplung unabhängig ist.

Diese Aufgabe wird erfindungsgemäß dadurch gelöst, daß an die Steuerschaltung eine Fühlervorrichtung mit einem die Drehstellung der Antriebswelle eines Fahrzeugrades erfassenden Drehstellungsfühler angeschlossen ist, die ein eine Veränderung der Drehstellung der Antriebswelle anzeigendes Signal an die Steuerschaltung abgibt, um ein Abschalten der Bremsdruckhaltevorrichtung zu bewirken.

Durch das von der erfindungsgemäß vorgesehenen Fühlervorrichtung erzeugte Signal, das das Drehverhalten der Antriebswelle des nicht gebremsten Rades mit hoher Genauigkeit anzeigt, wird der optimale Zeitpunkt zum Lösen der Bremse, also zum Abschalten der Bremsdruckhaltevorrichtung, beim Anfahren erkannt, und zwar unabhängig vom jweiligen Fahrzeuggewicht und der jeweiligen Steigung der Straße. Damit kann dieses Signal zum Abschalten der Bremsdruckhaltevorrichtung verwendet werden, um ein Anfahren in einer Steigung ohne ein Bergabrollen zu ermöglichen.

Ein weiterer Vorteil der erfindungsgmäßen Kraftfahrzeugbremsanlage ist darin zu sehen, daß nur ein einziger Betriebsparameter an dem Fahrzeug mitels einer Fühlervorrichtung überwacht zu werden braucht. Hierdurch wird insbesondere der schaltungstechnische Aufwand in wirtschaftlich vertretbaren Grenzen gehalten.

Schließlich läßt sich durch die Verwendung des von der Fühlervorrichtung erzeugten Signals zum Abschalten der Bremsdruckhaltevorrichtung erreichen, daß das Kupplungspedal bei stellstehendem Fahrzeug und eingeschalteter Bremsdruckhaltevorrichtung losgelassen werden kann, wenn mit dem Getriebeschalthebel der Leerlauf eingelegt ist, so daß sich der Fahrer wie bei einem ganz normalen Anhalten und Wiederanfahren auf ebener Straße verhalten kann. Hierdurch wird also eine weitere Vereinfachung der Bedienung des Kraftfahrzeugs bewirkt.

Um aufwendige Einstell- und Justierarbeiten am Kupplungsschalter zu vermeiden, ist bei einem Ausführungsbeispiel der Erfindung vorgesehen, daß der Kupplungsschalter der Steuerschaltung ein vom Kupplungspunkt unabhängiger Endschalter ist.

Bei einem weiteren Ausführungsbeispiel der Erfindung ist vorgesehen, daß die Steuerschaltung eine bistabile Kippstufe aufweist, deren Setzeingang an den Kupplungsschalter angeschlossen ist und deren Ausgangssignal die Bremsdruckhaltevorrichtung beaufschlagt. Hierdurch wird mit einer schaltungstechnisch einfachen Maßnahme sichergestellt, daß ein die Einschaltbereitschaft der Bremsdruckhaltevorrichtung bewirkendes Signal unabhängig vom Signalgeber, also vom Kupplungsschalter, aufrechterhalten bleibt, bis der Zeitpunkt zum Abschalten der Bremsdruckhaltevorrichtung von der Fühlervorrichtung ermittelt und angezeigt wird.

Ein weiteres, bevorzugtes Ausführungsbeispiel der Erfindung zeichnet sich dadurch aus, daß an den Rückstelleingang der bistabilen Kippstufe das Ausgangssignal der Fühlervorrichtung angelegt ist. Hierdurch wird es ermöglicht, daß für das Ein- und Abschalten der Bremsdruckhaltevorrichtung nur das Vorliegen bzw. Nichtvorliegen eines einzelnen Schaltsignals erfaßt zu werden braucht, wodurch sich schaltungstechnisch eine weitere Vereinfachung ergibt.

Um Fehlfunktionen der erfindungsgemäßen Kraftfahrzeugbremsanlage zu vermeiden, ist bei einer Weiterbildung der Erfindung vorgesehen, daß die Steuerschaltung ein vom Kupplungsschalter beaufschlagtes Zeitverzögerungsglied aufweist, das die Weiterleitung der Signale der Fühlervorrichtung an die bistabile Kippstufe steuert, wobei das Zeitverzögerungsglied ein Zeitfenster erzeugt. Hierdurch wird es ermöglicht, daß nur eine während eines tatsächlich durchgeführten Anfahrvorgangs erfaßte Änderung des Drehverhaltens zum Abschalten der Bremsdruckvorrichtung führt. Wird beispielsweise nach einem Anhalten des Fahrzeugs in einer Steigung und nach Einschalten der Bremsdruckhaltevorrichtung vom Fahrer der Leerlauf eingelegt und das Kupplungspedal losgelassen, so kann eine nach Ablauf des Zeitfensters beispielsweise durch eine Erschütterung des Fahrzeugs auftretende Änderung der Drehstellung der Antriebswelle kein Abschalten der Bremsdruckhaltevorrichtung mehr bewirken. Somit ist also eine wesentliche Fehlerquelle ausgeschaltet.

Um nun einerseits ein fehlerhaftes Abschalten der Bremsdruckhaltevorrichtung möglichst schnell auszuschalten und andererseits dem Fahrer genügend Zeit für ein gefühlvolles Anfahren zur Verfügung zu stellen, ist bei einer weiteren Ausführungsform der Erfindung vorgesehen, daß das Zeitfenster ein bis zehn Sekunden, insbesondere vier Sekunden beträgt.

Um das von der Fühlervorrichtung erzeugte Signal in eine für die weitere Verarbeitung besonders günstige Form zu bringen, ist bei einer Weiterbildung der Erfindung vorgesehen, daß die Steuerschaltung einen Schmitt-Trigger aufweist, an dessen Eingang der Ausgang des Drehstellungsfühlers der Fühlervorrichtung angeschlossen ist.

Ein weiteres bevorzugtes Ausführungsbeispiel der Erfindung ist dadurch gekennzeichnet, daß die Steuerschaltung ein zweites Zeitverzögerungsglied aufweist, das dem ersten Zeitverzögerungsglied nachgeordnet ist. Hierdurch wird erreicht, daß die Bremsdruckhaltevorrichtung nicht unmittelbar nach dem Erfassen einer Änderung der Drehstellung der Antriebswelle, sondern verzögert abgeschaltet wird, wodurch das eine Vortriebskraft für das Kraftfahrzeug liefernde Kupplungsmoment noch etwas weiter zunehmen kann, so daß der auf das Kraftfahrzeug wirkende Vortrieb groß genug ist, um auch in einer großen Steigung ein Anfahren ohne Bergabrollen sicherzustellen.

Ein weiteres, besonders vorteilhaftes Ausführungsbeispiel der Erfindung zeichnet sich dadurch aus, daß die Steuerschaltung von einer Sicherheitsschaltung beaufsohlagt ist, die bei ausgeschalteter Zündung und nicht betätigter Handbremse die Steuerschaltung unmittelbar mit einer Kraftfahrzeugbatterie verbindet. Hierdurch wird bei einem Abschalten der Zündung, das entweder versehentlich erfolgt oder zum Einsparen von Kraftstoff an einer Ampel vorgenommen wird, erreicht, daß die Bremsdruckhaltevorrichtung eingeschaltet bleibt und das Kraftfahrzeug weiter gebremst hält.

Um den Fahrer eines Kraftfahrzeugs, der sein Fahrzeug in einer Steigung abstellen will und es mittels der Bremsdruckhaltevorrichtung gebremst hält, beim Aussteigen daran zu erinnern, daß sicherheitshalber die Hand- oder Feststellbremse betätigt werden muß, ist bei einem anderen Ausführungsbeispiel der Erfindung vorgesehen, daß an die Sicherheitsschaltung ein Türkontaktschalter angeschlossen ist, der einen Warnsignalgeber beaufschlagt, wobei als Warnsignalgeber ein akkustischer Summer vorgesehen ist.

Ein weiteres Ausführungsbeispiel der Erfindung ist dadurch gekennzeichnet, daß an die Steuerschaltung ein Leerlaufschalter angeschlossen ist, der ein die Weiterleitung der Impulse der Fühlervorrichtung steuerndes Schaltglied beaufschlagt, wobei der Leerlaufschalter an das Zeitverzögerungsglied angeschlossen ist. Hierdurch wird bei einem unmittelbar nach dem Loslassen des Kupplungspedals auftretendem Bergabrollen verhindert, daß die Bremsdruckhaltevorrichtung abgeschaltet wird, wenn der Leerlauf eingelegt ist. Ein derartiges Bergabrollen kann beispielsweise dann auftreten, wenn der in den Radbremsyzlindern von der Bremsdruckhaltevorrichtung gespeicherte Druck nicht groß genug ist, um das Kraftfahrzeug mit nur zwei gebremsten Rädern sicher zu halten. Tritt nun ein derartiges Bergabrollen auf, so kann der Fahrer durch nochmaliges Betätigen der Kraftfahrzeugbremsanlage den Bremsdruck in den entsprechenden Radbremszylindern ohne weiteres erhöhen, da die Bremsdruckhaltevorrichtung eingeschaltet bleibt.

Bei einem anderen Ausführungsbeispiel ist zum gleichen Zweck vorgesehen, daß der Leerlaufschalter an einem Eingang eines UND-Gliedes angeschlossen ist, an dessen anderen Eingang die Signale der Fühlervorrichtung angelegt sind.

Um zu verhindern, daß die Bremsdruckhaltevorrichtung infolge eines Defekts der Fühlervorrichtung während des normalen Fahrbetriebs eingeschaltet werden kann, ist bei einem weiteren Ausführungsbeispiel der Erfindung vorgesehen, daß an die Steuerschaltung ein auf die Fahrzeuggeschwindigkeit ansprechender Signalgeber vorgesehen ist, dessen Ausgang an einen Eingang eines UND-Gliedes angelegt ist, an dessen zumindest einen anderen Eingang der Kupplungsschalter angeschlossen ist.

Eine andere Weiterbildung der Erfindung zeichnet sich dadurch aus, daß die Steuerschaltung einen Neigungsschalter umfaßt, der bei in Anfahrrichtung bergab geneigtem Fahrzeug geöffnet, ansonsten geschlossen ist, wobei parallel zum Neigungsschalter ein Rückwärtsgangschalter geschaltet ist, der bei eingelegtem Rückwärtsgang geschlossen, ansonsten geöffnet ist. Hierdurch wird es ermöglicht, daß der Fahrer insbesondere beim Rückwärtseinparken mit einem in Fahrtrichtung bergab stehenden Fahrzeug die Bremsdruckhaltevorrichtung für eine Anfahrhilfe wirksam einsetzen kann.

Bei einem anderen bevorzugten Ausführungsbeispiel der Erfindung ist vorgesehen, daß die Steuerschaltung eine Impulshalteschaltung umfaßt, an die das Ausgangssignal der Fühlervorrichtung angelegt ist und deren Ausgangssignal über eine Verknüpfungsglied, dessen anderer Eingang mit dem Ausgang der bistabilen Kippstufe verbunden ist, die Bremsdruckhaltevorrichtung beaufschlagt, wobei das Verknüpfungsglied von einem ODER-Glied gebildet ist. Durch diese Ausführungsform der Erfindung wird es ermöglicht, daß die Bremsdruckhaltevorrichtung beim Anfahren in Abhängigkeit von den von der Fühlervorrichtung gelieferten Impulsen wiederholt ein- und ausgeschaltet werden kann, wodurch sich der Bremsdruck in den Radbremszylindern des von der Bremsdruckhaltevorrichtung beaufschlagten Bremskreises an den jeweiligen Anfahrvorgang angepaßt abbauen läßt, so daß besonders gleichmäßig angefahren werden kann.

Bei einer Weiterbildung dieses Ausführungsbeispiels der Erfindung ist vorgesehen, daß durch die erfindungsgemäße Verwendung einer Zeitstufe in der Impulshalteschaltung sich die Zeit, während der die Bremsdruckhaltevorrichtung jeweils abgeschaltet wird, an die beim jeweiligen Fahrzeug vorliegenden Gegebenheiten besonders einfach anpassen läßt.

Um das Ein- und Ausschalten der Bremsdruckhaltevorrichtung während des Anfahrens jedoch nicht unnötig oft zu wiederholen, ist bei einem weiteren Ausführungsbeispiel der Erfindung vorgesehen, daß die Impulshalteschaltung einen vom Ausgangssignal der Fühlervorrichtung beaufschlagten Zähler aufweist, der nach einer vorgebbaren Anzahl von Impulsen den Ausgang der Impulshalteschaltung sperrt.

Bei einer vorteilhaften Weiterbildung der Erfindung ist vorgesehen, daß ein Ausgang des Zählers zum Sperren des Ausgangs der Impulshalteschaltung an eine Torschaltung angelegt ist, deren anderer Eingang vom Inverter beaufschlagt ist und deren Ausgang den Ausgang der Impulshalteschaltung bildet, wobei die Torschaltung von einem UND-Glied gebildet ist. Hierdurch läßt sich die Sperrung der Impulshalteschaltung auf schaltungstechnisch besonders einfache und sichere Weise durchführen.

Um die einmal bewirkte Sperrung der Impulshalteschaltung auch bei weiter auftretenden Impulsen von der Fühlervorrichtung sicher aufrechtzuerhalten, ist vorgesehen, daß an den Ausgang des Zählers der Setzeingang eines D-Flip-Flops angeschlossen ist, dessen invertierter Ausgang an das UND-Glied angelegt ist.

Um sicherzustellen, daß die Impulshalteschaltung zu Beginn jedes Anfahrvorgangs zur sicheren Erfassung der vorgegebenen Anzahl von Impulsen richtig eingestellt ist, ist bei einem weiteren Ausführungsbeispiel der Erfindung vorgesehen, daß das Ausgangssignal der bistabilen Kippstufe an die Impulshalteschaltung angelegt ist, wobei das Ausgangssignal der bistabilen Kippstufe an Rückstelleingänge des Zählers und des D-Flip-Flops angelegt ist.

Um nun den Druckabbau während eines Anfahrvorgangs in einer Steigung an die jeweils vorliegende Größe der Steigung einfach anpassen zu können, ist bei einem weiteren bevorzugten Ausführungsbeispiel der Erfindung vorgesehen, daß zum Einstellen der Haltezeit an die Zeitstufe eine Widerstandsschaltung angeschlossen ist, wobei die Widerstandsschaltung zwei zueinander parallel geschaltete Widerstände umfaßt, wobei mit zumindest einem der Widerstände ein Neigungsschalter in Reihe geschaltet ist. Hierdurch läßt sich die Haltezeit der Impulshaltestufe, während der die Bremsdruckhaltevorrichtung abgeschaltet wird, auf besonders einfache Weise an die jeweils vorliegende Steigung anpassen.

Bei einem weiteren Ausführungsbeispiel der Erfindung ist vorgesehen, daß in Reihe mit jedem der beiden Widerstände ein Neigungsschalter geschaltet ist. Hierdurch läßt sich erreichen, daß beim Anfahren in einer Ebene die einmal abgeschaltete Bremsdruckhaltevorrichtung abgeschaltet bleibt, da die Haltezeit der Zeitstufe in einfacher Weise praktisch auf unendlich eingestellt werden kann.

Bei einem anderen Ausführungsbeispiel der Erfindung ist zu dem gleichen Zweck vorgesehen, daß zum Einstellen der Haltezeit an die Zeitstufe ein veränderlicher Widerstand angeschlossen ist, der von einem kontinuierlich verstellbaren Neigungsschalter beaufschlagt ist. Hierdurch läßt sich außerdem erreichen, daß die Haltezeit jeweils besonders feinfühlig an die vorliegende Steigung angepaßt wird.

Die Erfindung wird im folgenden beispielsweise anhand der Zeichnung näher beschrieben; in dieser zeigt:

Fig. 1    eine schematische Darstellung einer Kraftfahrzeugbremsanlage mit Bremsdruckhaltevorrichtung,

Fig. 2    ein schematisches Blockschaltbild einer Steuerschaltung für die Kraftfahrzeugbremsanlage nach Fig. 1,

Fig. 3    ein schematisches Blockschaltbild einer erweiterten Steuerschaltung für die Kraftfahrzeugbremsanlage nach Fig. 1,

Fig. 4    ein schematisches Blockschaltbild einer weiteren Steuerschaltung für die Kraftfahrzeugbremsanlage nach Fig. 1,

Fig. 5    ein schematisches Blockschaltbild noch einer weiteren Steuerschaltung für eine Kraftfahrzeugbremsanlage nach Fig. 1 und

Fig. 6    ein Zeitdiagramm des Bremsdruckabbaus durch die Bremsdruckhaltevorrichtung bei einer Kraftfahrzeugbremsanlage nach Fig. 1 unter Verwendung einer Steuerschaltung nach Fig. 5.

In den verschiedenen Figuren der Zeichnung sind einander entsprechende Bauteile mit gleichen Bezugszeichen bezeichnet.

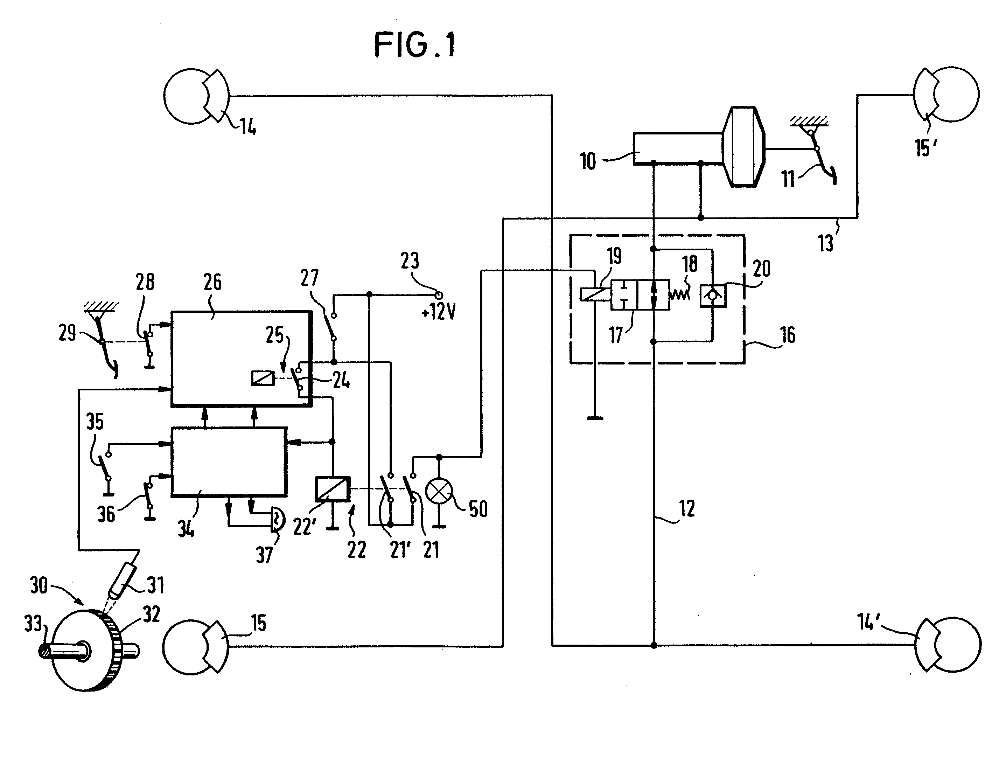

Fig. 1 zeigt eine Kraftfahrzeugbremsanlage für ein Kraftfahrzeug mit Frontantrieb, die einen von einem Bremspedal 11 beaufschlagten Hauptbremszylinder 10 aufweist, an den ein erster und ein zweiter Bremskreis 12 bzw. 13 angeschlossen ist, die zu Radbremszylindern von den einzelnen Fahrzeugrädern zugeordneten Bremsen 14, 14' bzw. 15, 15' führen.

In den ersten Bremskreis 12 der die einem Vorderrad zugeordnete Bremse 14 und die dem diagonal gegenüberliegendem Hinterrad zugeordnete Bremse 14' beaufschlagt, ist eine Bremsdruckhaltevorrichtung 16 vorgesehen, die ein normalerweise offenes, elektromagnetisch betätigbares Schaltventil 17 aufweist, das als 2/2-Wegeventil ausgebildet ist. Das Schaltventil 17 wird von einer Rückstellfeder 18 in seine Offenstellung vorgespannt und kann von einem Elektromagneten 19 in seine Schließstellung umgeschaltet werden. Parallel zum Schaltventil 17 ist ein Rückschlagventil 20 geschaltet, das einen Rückfluß der Bremsflüssigkeit von den Radbremszylindern der Bremsen 14, 14' in den Hauptbremszylinder 10 sperrt und das die entgegengesetzte Strömungsrichtung freigibt. Der zweite Bremskreis 13, der nicht von der Bremsdruckhaltevorrichtung 16 beaufschlagt wird, führt zu der Bremse 15 des anderen Vorderrades und zu der Bremse 15', die das dazu diagonal angeordnete Hinterrad bremst. Somit ist eines der angetriebenen Vorderräder über den ersten Bremskreis 12 mit Bremsdruckhaltevorrichtung 16 und das andere Vorderrad über den zweiten Bremskreis 13 bremsbar. Im Falle eines Kraftfahrzeugs mit Heckantrieb und üblicherweise nicht diagonalen, zweikreisigen Bremsaufteilung gilt die Anordnung dann entsprechend auf ein Hinterrad bezogen.

Der Elektromagnet 19 ist zusammen mit einem Schließkontakt 21 eines Relais 22 in Reihe zwischen einen mit dem positiven Pol einer nicht dargestellten Kraftfahrzeugbatterie verbundenen Anschlußpunkt 23 und Masse geschaltet. Parallel zum Elektromagneten 19 liegt eine Kontrollampe 50, die anzeigt, wenn der Elektromagnet 19 erregt ist und das Schaltventil 17 somit in seine Schließstellung umgeschaltet ist.

Die Relaisspule 22' des Relais 22 ist über einen Schließkontakt 24 eines in einer Steuerschaltung 26 vorgesehenen Relais 25 und einen Tastschalter 27 mit dem Anschlußpunkt 23 verbunden. Parallel zum Tastschalter 27 ist ein Selbsthaltekontakt 21' des Relais 22 geschaltet.

Die Steuerschaltung 26 ist über einen Kupplungsschalter 28 beaufschlagbar, der über eine Kupplungspedal 29 zum Aus- und Einrücken einer zwischen Fahrzeugmotor und angetriebenen Rädern vorgesehenen Kupplung betätigbar, wobei der Kupplungsschalter 28 als Endschalter ausgebildet ist, so daß er unabhängig von der Lage des Kupplungspunktes bezüglich des Kupplungspedalweges nur in der betätigten Endlage des Kupplungspedals 29 umgeschaltet wird.

Der Steuerschaltung 26 ist ferner von einer Fühlervorrichtung 30, die einen Drehstellungsfühler 31 und ein Kodierungselement 32 umfaßt, ein eine Änderung der Drehstellung des vom zweiten Bremskreis 13 beaufschlagten Vorderrades anzeigendes Signal zuführbar. Das Kodierungselement 32 ist dabei mit der Antriebswelle 33 des entsprechenden Vorderrades verbunden. Als Drehstellungsfühler 31 ist eine Infrarot-Lichtschranke vorgesehen, er kann aber auch als Hallgeber, Reedkontakt oder Näherungsschalter ausgebildet sein. Der Drehstellungsfühler sollte jedoch in jedem Fall ein digitales Signal abgeben.

Schließlich ist noch eine Sicherheitsschaltung 34 vorgesehen, die die Spannungsversorgung der Steuerschaltung 26 des Elektromagneten 19 der Bremsdruckhaltevorrichtung 16 auch für den Fall sicherstellt, daß die Zündung kurzzeitig abgeschaltet wird. An die Sicherheitsschaltung 34, die einen Summer 37 zur Abgabe eines Warnsignals beaufschlagt, sind als Signalgeber ein Handbremskontaktschalter 35 und ein Türkontaktschalter 36 angeschlossen.

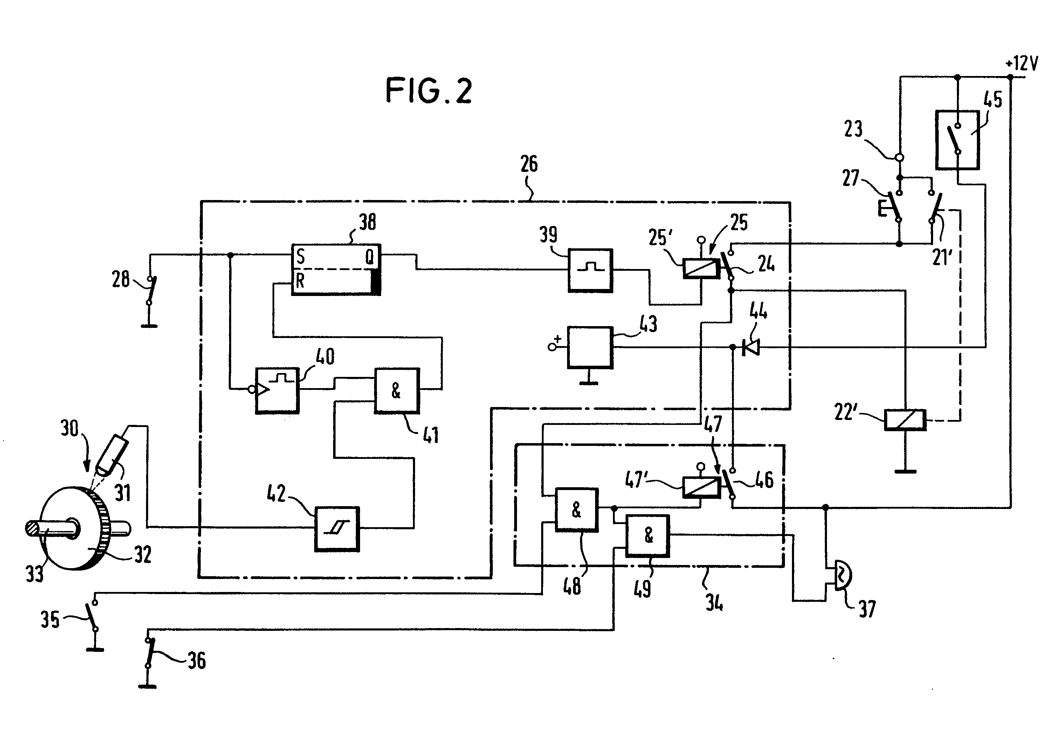

Der Aufbau der Steuerschaltung 26 und der Sicherheitsschaltung 34 wird im folgenden anhand von Fig. 2 näher erläutert.

Die Steuerschaltung 26 besitzt eine bistabile Kippstufe 38, deren Setzeingang S an den Kupplungsschalter 28 angeschlossen ist. Der Ausgang der bistabilen Kippstufe 38 ist über ein Zeitverzögerungsglied 39 mit der Relaisspule 25' des Relais 25 verbunden. Außerdem ist der Kupplungsschalter 28 mit einem weiteren Zeitverzögerungsglied 40 verbunden, dessen Ausgang an einen Eingang eines UND-Gliedes 41 geführt ist, dessen Ausgang wiederum an den Rückstelleingang R der bistabilen Kippstufe 38 angelegt ist. Schließlich ist der Drehstellungsfühler 31 über einen Schmitt-Trigger 42 an einen zweiten Eingang des UND-Gliedes 41 angelegt.

Außerdem weist die Steuerschaltung 26 einen Spannungsstabilisator 43 auf, der über eine Diode 44 und einen nur schematisch dargestellten Zündschalter 45 mit dem positiven Pol der nicht dargestellten Kraftfahrzeugbatterie verbunden ist.

Die Sicherheitsschaltung 34 besitzt ein erstes UND-Glied 48 dessen erster Eingang mit dem Schließkontakt 24 des Relais 25 der Steuerschaltung 26 verbunden ist. Der zweite Eingang des ersten UND-Gliedes 48 ist an den Handbremskontrollschalter 35 angeschlossen, während der Ausgang des UND-Gliedes 48 an eine Relaisspule 47' eines Relais 47 angelegt ist, dessen Schließkontakt 46 den Spannungsstabilisator 43 unmittelbar mit dem positiven Pol der Kraftfahrzeugbatterie verbindet, wenn er geschlossen ist. Zusätzlich ist der Ausgang des ersten UND-Gliedes 48 an einen ersten Eingang eines zweiten UND-Gliedes 49 der Sicherheitsschaltung 34 angeschlossen, dessen zweiter Eingang mit dem Türkontaktschalter 36 verbunden ist, und dessen Ausgang zum Summer 37 führt, der unmittelbar am positiven Pol der Kraftfahrzeugbatterie anliegt.

Die beschriebene Kraftfahrzeugbremsanlage arbeitet unter Verwendung der elektronischen Schaltung nach Fig. 2 wie folgt:

Im normalen Fahrbetrieb ist der Elektromagnet 19 der Bremsdruckhaltevorrichtung 16 nicht erregt und das Schaltventil 17 befindet sich somit in seiner normalen Offenstellung, so daß das Kraftfahrzeug mit der Kraftfahrzeugbremsanlage in bekannter Weise gebremst werden kann, wobei insbesondere beim Loslassen des Bremspedals 11 der während der Bremsung an den Radbremszylindern der Bremsen 14, 14' anstehende Bremsdruck wieder über das offene Schaltventil 17 abgebaut werden kann.

Wird nun das Fahrzeug vom Fahrer in einer Steigung bis zum Stillstand abgebremst und das Kupplungspedal 29 voll getreten, so wird der Kupplungsschalter umgeschaltet, vorzugsweise geöffnet, so daß ein Setzsignal an den Setzeingang der bistabilen Kippstufe 38 angelegt wird, das ein Ausgangssignal bewirkt, das die Erregung der Relaisspule 25' des Relais 25 zur Folge hat. Das Relais 25 zieht somit an und schließt seinen Schließkontakt 24.

Wünscht der Fahrer nun für ein Anfahren am Berg eine Anfahrhilfe durch die Bremsdruckhaltevorrichtung 16, so braucht er nur den Tastschalter 27 zu betätigen. Dadurch wird die Verbindung der Relaisspule 22' des Relais 22 mit dem an den positiven Batteriepol angeschlossenen Anschlußpunkt 23 verbunden. Über den geschlossenen Tastschalter 27 und den geschlossenen Schließkontakt 24 fließt nun ein Erregungsstrom durch die Relaisspule 22', so daß das Relais 22 anzieht und den Selbsthaltekontakt 21' sowie den Schließkontakt 21 schließt. Nach dem Loslassen des Tastschalters 27 hält der Selbsthaltekontakt 21' die Verbindung der Relaisspule 22' mit dem Anschlußpunkt 23 solange aufrecht, wie auch der Schließkontakt 24 des Relais 25 der Steuerschaltung 26 geschlossen bleibt.

Nun kann über den Schließkontakt 21 des Relais 22 ein Erregerstrom durch den Elektromagneten 19 fließen, der das Schaltventil 17 in seine Schließstellung umschaltet. Wird nun das Bremspedal 11 vom Fahrer losgelassen, so wird nur der Bremsdruck in den Radbremszylindern der Bremsen 15, 15' abgebaut, während der Bremsdruck in den Radbremszylindern der Bremsen 14, 14' infolge des geschlossenen Schaltventils 17 aufrechterhalten wird. Das Fahrzeug wird also auch nach Loslassen des Bremspedals 11 von den unter Bremsdruck gehaltenen Bremsen 14, 14' gebremst und somit an einem Bergabrollen gehindert.

Bei nicht angezogener Handbremse und somit geöffnetem Handbremskontrollschalter 35 wird ein vom Schließkontakt 24 des Relais 25 an das erste UND-Glied 48 der Sicherheitsschaltung 34 angelegtes Signal an die Relaisspule 47' des Relais 47 der Sicherheitsschaltung 34 weitergeführt, so daß das Relais 47 anzieht und den Schließkontakt 46 schließt. Hierdurch wird der Spannungsstabilisator 43 unmittelbar mit dem positiven Pol der Kraftfahrzeugbatterie verbunden, so daß auch bei geöffnetem Zündschalter 45 die Spannungsversorgung der Steuerschaltung 26 sichergestellt ist und die Bremsdruckhaltevorrichtunng 16 eingeschaltet bleibt.

Will der Fahrer das in einer Steigung angehaltene und mittels der Bremsdruckhaltevorrichtung 16 gebremste Fahrzeug abstellen und es verlassen, so wird über den sich beim Öffnen der Tür ebenfalls öffnenden Türkontaktschalter 36 ein Signal an das zweite UND-Glied 49 der Sicherheitsschaltung 34 abgegeben, so daß das zweiten UND-Glied 49, da auch an seinem ersten Eingang ein entsprechendes Signal vom ersten UND-Glied 48 anliegt, ein Ausgangssignal an den Summer 37 angeben, so daß dieser ein Warnsignal erzeugt, das den Fahrer daran erinnert, die Hand- oder Feststellbremse des Kraftfahrzeuges zu betätigen. Dabei wird der Handbremskontrollschalter 35 geschlossen, woraufhin am zweiten Eingang des ersten UND-Gliedes 48 ein das erste UND-Glied 48 sperrendes Signal erscheint, so daß das Relais 47 abfällt und die Spannungsversorgung der Steuerschaltung 26 unterbricht. Damit fällt auch das Relais 25 der Steuerschaltung 26 sowie infolge dessen das Relais 22 ab, so daß der Elektromagnet 19 entregt wird und das Umschaltventil 17 von der Rückstellfeder 18 in seine Offenstellung zürückgeführt wird. Das Kraftfahrzeug wird damit nur noch von der Hand- oder Feststellbremse gebremst gehalten.

Will der Fahrer das Fahrzeug jedoch bei eingeschalteter Bremsdruckhaltevorrichtung 16 an der Steigung anfahren, so läßt er in bekannter Weise das Kupplungspedal langsam kommen und betätigt gleichzeitig das Gaspedal. Hierdurch verschwindet unmittelbar das am Setzeingang S der bistabilen Kippstufe 38 anstehende Setzsignal, während das das Relais im angezogenen Zustand haltende Ausgangssignal der bistabilen Kippstufe 38 zunächst erhalten bleibt. Durch das Schließen des Kupplungsschalters 28 wird außerdem über das Zeitverzögerungsglied 40 ein das UND-Glied 41 der Steuerschaltung 26 freigebendes Signal an dessen ersten Eingang angelegt.

Das Zeitverzögerungsglied 40 hält nun für eine kurze Zeit, z.B. vier Sekunden, das das UND-Glied 41 freigebende Signal, so daß zeitlich innerhalb dieses Zeitfensters von vier Sekunden ein Ausgangssignal der Fühlervorrichtung 30 über das UND-Glied 41 als Rückstellsignal an die bistabile Kippstufe 38 angelegt werden kann. Nach Ablauf des Zeitfensters sperrt das Ausgangssignal des Zeitverzögerungsgliedes 40 das UND-Glied 41 wieder.

Hierdurch wird bewirkt, daß nach Ablauf der Verzögerungszeit, also nach Ablauf des Zeitfensters, keine Signale von der Fühlervorrichtung 30 über das UND-Glied 41 zur bistabilen Kippstufe 38 gelangen können. Läßt z.B. der Fahrer nach Einlegen des Leerlaufs das Kupplungspedal 29 los, so schließt der Kupplungsschalter 28 und gibt über das Zeitverzögerungsglied 40 das UND-Glied 41 für die Dauer des Zeitfensters, also für vier Sekunden, frei. Nach Ablauf des Zeitfensters wird das UND-Glied 41 wieder gesperrt.

Erfaßt jetzt die Fühlervorrichtung 30 eine Änderung der Drehstellung der Antriebswelle 33, die beispielsweise durch eine Erschütterung des Fahrzeugs hervorgerufen werden kann, so führt ein entsprechendes Signal der Fühlervorrichtung 30 nicht zum Abschalten der Bremsdruckhaltevorrichtung 16. Somit wird ein fehlerhaftes Abschalten der Bremsdruckhaltevorrichtung 16 ausgeschlossen.

Wird jedoch beim Einrücken der Kupplung zum Anfahren das Kupplungsmoment vor Ablauf des Zeitfensters ausreichend groß, so kann sich die Antriebswelle 33 des von der Bremsdruckhaltevorrichtung 16 nicht beeinflußten Rades gegenüber derjenigen, deren Rad von der Bremsdruckhaltevorrichtung 16 gebremst wird, geringfügig drehen. (Es ergibt sich eine kleine Drehwinkeländerung, die einen geringen Lenkeinschlag, der vom Fahrer durch Festhalten des Lenkrades aufgefangen wird, und eine Verspannung in den Gummielastizitäten der Radaufhängung verursacht). Diese Drehung wird von der Fühlervorrichtung 30 erfaßt, die auf die Veränderung der Drehstellung der Antriebswelle 33 so reagiert, daß ein Signal vom Drehstellungsfühler 31 über den Schmitt-Trigger 42 an den zweiten Eingang des UND-Gliedes 41 angelegt wird, und als dessen Ausgangssignal dem Rückstelleingang R der bistabilen Kippstufe 38 als Rückstellsignal zugeführt wird.

Daraufhin ändert sich das Ausgangssignal der bistabilen Kippstufe 38, so daß die Relaisspule 25 entregt wird und das Relais 25 abfällt. Damit fällt auch das Relais 22 ab, so daß dessen Schließkontakt 21 öffnet und der Erregungsstrom durch den Elektromagneten 19 unterbrochen wird. Daraufhin wird das Schaltventil 17 von seiner Rückstellfeder 18 in seine Offenstellung umgeschaltet, so daß der Bremsdruck in den Radbremszylindern der Bremsen 14, 14' zum nicht betätigten Hauptbremszylinder 10 hin abgebaut werden kann.

Dabei wird das Ausgangssignal der bistabilen Kippstufe 38 durch das der bistabilen Kippstufe 38 nachgeschaltete Zeitverzögerungsglied 39 für eine kurze Zeit verzögert, um die Größe der für den Abbau der Bremskraft erforderlichen Drehbewegung des angetriebenen Rades so einstellen zu können, daß die Antriebskraft der Räder beim Abbau der Bremskraft so groß ist, daß sie einen genügenden Vortrieb des Kraftfahrzeugs bewirkt, so daß ohne die Gefahr eines Bergabrollens angefahren werden kann.

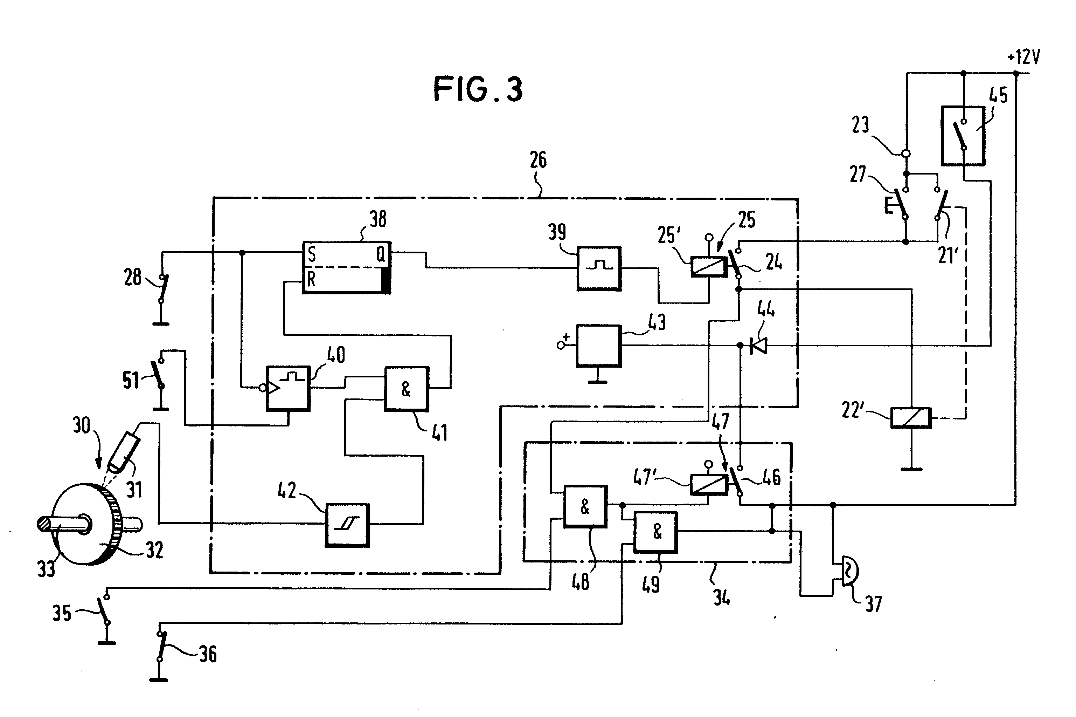

Fig. 3 zeigt nun eine erweiterte Steuerschaltung, durch die der Anhaltevorgang optimiert wird. Das vom Kupplungsschalter 28 beaufschlagte Zeitverzögerungsglied 40 der Steuerschaltung 26, die im wesentlichen genauso aufgebaut ist, wie die Steuerschaltung 26 nach Fig. 2, ist dabei an einen Leerlaufschalter 51 angeschlossen, der die Neutralstellung eines Schaltgetriebehebels, also den eingelegten Leerlauf , erfaßt.

Beim Bremsen an einer Steigung wird vom Fahrer des Kraftfahrzeugs ein entsprechend der Steigung notwendiger Bremsdruck aufgebracht. Da bei der automatischen Bremshaltung durch die Bremsdruckhaltevorrichtung 16 nach dem Lösen des Bremspedals 11 nur die vom ersten Bremskreis 12 beaufschlagten Bremsen 14, 14' das Fahrzeug halten, muß von vornherein ein größerer Bremsdruck erzeugt werden, um ein Bergabrollen zu verhindern. Tritt trotzdem ein Bergabrollen auf, so würde sich bei einer Kraftfahrzeugbremsanlage mit einer Steuerschaltung gemäß Fig. 2 das Schaltventil 17 öffnen, falls das Kupplungpedal 19 nicht mehr vollständig durchgetreten ist, und ein erneutes Bremsen einschließlich der Betätigung des Tastschalters 27 wäre erforderlich. Um diese Wiederholung zu vermeiden, erfaßt der Leerlaufschalter 51 die Neutralstellung des Getriebeschalthebels und steuert das Zeitverzögerungsglied 40 so an, daß das Ausgangssignal des Zeitverzögerungsgliedes 40 das UND-Glied 41 der Steuerschaltung 26 gesperrt hält, so daß Signale vom Drehstellungsfühler 41 über den Schmitt-Trigger 42 vom UND-Glied 41 nicht zum Rückstelleingang R der bistabilen Kippstufe 38 durchgelassen werden.

Dadurch bleibt das Schaltventil 17 der eingeschalteten Bremsdruckhaltevorrichtung 16 geschlossen. Es ist also ein Nachbremsen möglich, da der im Hauptbremszylinder 10 über das Bremspedal 11 erzeugte Bremsdruck auch bei geschlossenem Schaltventil 17 über das in Richtung vom Hauptbremszylinder 10 zu den Radbremszylindern der Bremsen 14, 14' offene Rückschlagventil 20 zu den entsprechenden Radbremszylindern gelangen kann.

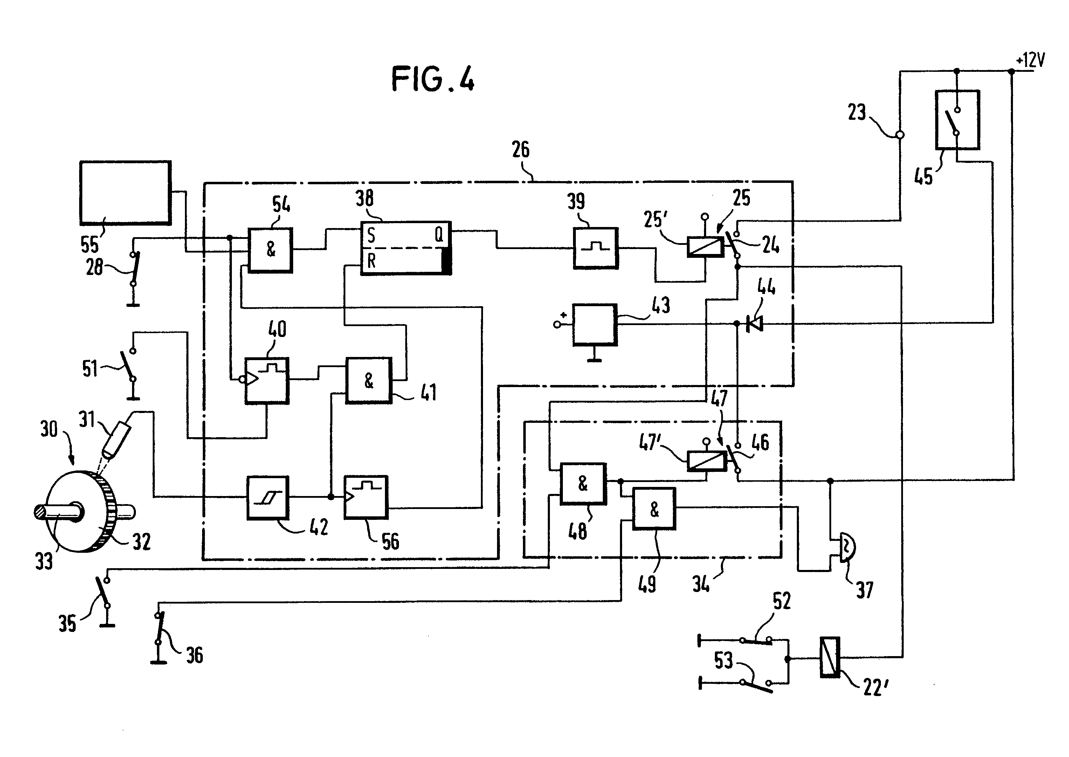

Nach Fig. 4 ist bei einer Kraftfahrzeugbremsanlage mit erweiterter Steuerschaltung 26 die Relaisspule 22' des Relais 22, dessen Schließkontakt 21 in Reihe mit dem Elektromagneten 19 liegt, über einen Neigungsschalter 52, der z.B. durch Hin-und Herfließen von flüssigem Quecksilber je nach seiner Lage, also bergab oder bergauf seine Kontakte schließt mit Masse verbunden. Parallel zu dem Neigungsschalter 52 ist ein Rückwärtsgangschalter 53 geschaltet, der anzeigt, ob der Rückwärtsgang eingelegt ist oder nicht. Da diese Kraftfahrzeugbremsanlage vollautomatisch arbeitet, kann der manuell betätigbare Tastschalter 27 (Fig. 1 bis 3) entfallen.

Die Steuerschaltung 26 weist ein zusätzliches UND-Glied 54 auf, dessen erster Eingang mit dem Kupplungsschalter 28 verbunden ist. Ein zweiter Schalter des UND-Gliedes 54 ist ggfs. mit einem Signalgeber 55 verbunden, der vom Tachometer des Fahrzeugs beaufschlagt wird und der nur dann ein das UND-Glied 54 freigebendes Signal abgibt, wenn die Fahrzeuggeschwindigkeit nahe Null ist. Ein dritter Eingang des UND-Gliedes 54 wird von einer monostabilen Kippstufe 56 beaufschlagt, deren Eingang mit dem Ausgang des Schmitt-Triggers 42 verbunden ist.

Im übrigen ist die Steuerschaltung 26 nach Fig. 4 in gleicher Weise aufgebaut, wie die Steuerschaltung 26 nach Fig. 3.

Die Steuerschaltung 26 nach Fig. 4 arbeitet nun wie folgt:
Solange sich das Fahrzeug in Bewegung befindet, liefert der Drehstellungsfühler 31 über den Schmitt-Trigger 42 und die monostabile Kippstufe 56 Signale, die das UND-Glied 54 sperren. Aus Sicherheitsgründen, für den Fall, daß die Fühlervorrichtung 30 ausfällt, liefert auch der vom Tachometer des Fahrzeugs beaufschlagte Signalgeber 55 das UND-Glied 54 sperrende Signale an den zweiten Eingang des UND-Gliedes 54, solange die Fahrzeuggeschwindigkeit wesentlich von Null verschieden ist.

Sobald das Fahrzeug jedoch steht, wird das UND-Glied 54 freigegeben, so daß beim Betätigen des Kupplungspedals 29 der Kupplungsschalter 28 ein Setzsignal über das UND-Glied 54 an den Setzeingang S der bistabilen Kippstufe 38 liefern kann, dessen Ausgangssignal dann verzögert durch das erste Zeitverzögerungsglied 39 ein Anziehen des Relais 25 und damit ein Schließen des Schließkontakts 24 bewirkt.

Wenn auch der Neigungsschalter 52 geschlossen ist, also das Fahrzeug in einer Steigung bergauf steht, zieht auch das Relais 22 an, so daß die Bremsdruckhaltevorrichtung 16 eingeschaltet wird.

Steht das Fahrzeug jedoch bergab, so ist der Neigungsschalter 52 geöffnet. Soll nun rückwärts angefahren werden, z.B. um rückwärts bergauf in eine Parklücke einzuparken, so wird der Rückwärtsgangschalter 53 geschlossen, so daß hierdurch auch bei bergab stehendem Fahrzeug das Relais 22 anzieht und die Bremsdruckhaltevorrichtung 16 eingeschaltet wird.

Das Anfahren mit einer Kraftfahrzeugbremsanlage bei der eine Steuerschaltung nach Fig. 4 verwendet wird, erfolgt in gleicher Weise wie oben beschrieben.

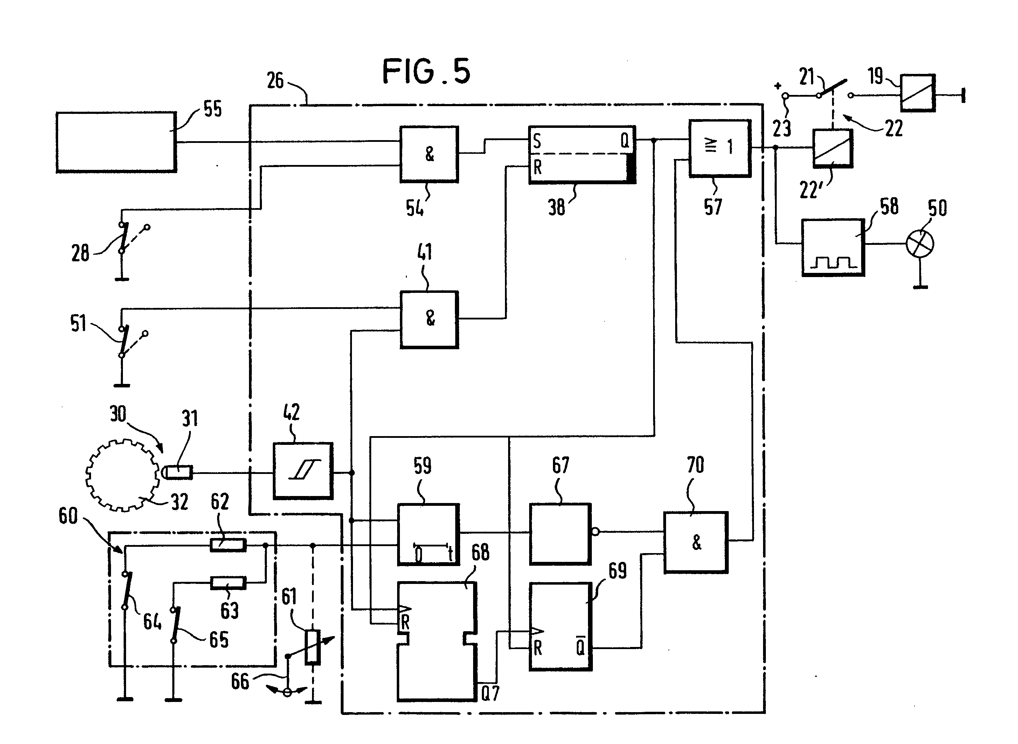

Im folgenden wird anhand von Fig. 5 eine weitere Steuerschaltung 26 beschrieben, die eine bistabile Kippstufe 38 aufweist, deren Ausgang Q an einen ersten Eingang eines ODER-Gliedes 57 angelegt ist. Der Ausgang des ODER-Gliedes 57 beaufschlagt die Relaisspule 22' eines Relais 22 dessen Schließkontakt 21 in Reihe mit dem Elektromagneten 19 des Schaltventils 17 zwischen den mit dem positiven Pol der Kraftfahrzeugbatterie verbundenen Anschlußpunkt 23 und Masse geschaltet ist. Zusätzlich ist der Ausgang des ODER-Gliedes 57 an eine Blinkschaltung 58 angeschlossen, die die Kontrollampe 50 so ansteuert, daß sie ein optisches Blinksignal erzeugt, sobald der Elektromagnet 19 erregt und somit das Schaltventil 17 geschlossen ist. Als Kontrollampe 50 kann dabei die Kontrollampe für die Handbremse verwendet werden.

Der Drehstellungsfühler 31 der Fühlervorrichtung 30 ist über einen Schmitt-Trigger 42 mit einem Eingang eines ersten UND-Gliedes 41 der Steuerschaltung 26 verbunden, dessen Ausgang an den Rückstelleingang R der bistabilen Kippstufe 38 geführt ist. Der andere Eingang des ersten UND-Gliedes 41 ist mit einem Leerlaufschalter 51 verbunden.

Ferner ist ein erster Eingang eines zweiten UND-Gliedes 54 der Steuerschaltung 26 mit dem Kupplungsschalter 28 verbunden. An den anderen Eingang des ersten UND-Gliedes 54 ist der Ausgang eines Signalgebers 55 angeschlossen, der vom Ta chometer des Fahrzeugs beaufschlagt wird und der ein das UND-Glied 54 freigebende Signal liefert, sobald die Fahrzeuggeschwindigkeit im wesentlichen gleich Null ist. Der Ausgang des UND-Gliedes 54 ist an den Setzeingang S der bistabilen Kippstufe 38 geführt.

Der Ausgang des von dem Drehstellungsfühler 31 beaufschlagten Schmitt-Trigger 42 ist ferner an eine Zeitstufe 59 angeschlossen, deren Verzögerungszeit entweder mittels einer Widerstandsschaltung 60 oder durch einen veränderbaren Widerstand 61 einstellbar ist. Die Widerstandsschaltung 60 besteht dabei aus zwei parallel zueinander geschalteten Widerständen 62, 63, die über Neigungsschalter 64 bzw. 65 mit Masse verbunden sind. Anstelle der Widerstandsschaltung 60 kann auch der veränderbare Widerstand 61 vorgesehen sein, dessen Widerstandswert über einen kontinuierlich verstellbaren Neigungsschalter 66 verändert werden kann.

Der Ausgang der Zeitstufe 59 ist über einen Inverter 67 an einen Eingang eines dritten UND-Gliedes 70 angelegt, dessen Ausgang an einen zweiten Eingang des ODER-Gliedes 57 geführt ist.

Zusätzlich ist der Ausgang des Schmitt-Triggers 42 an den Zähleingang eines Zählers 68 angelegt, dessen Ausgang Q7, an dem nach dem 7., am Zähleingang anliegenden Impuls ein Stellsignal anliegt, an den Stelleingang eines D-Flip-Flops 69 geführt ist. Der invertierte Ausgang $\overline{Q}$ des D-Flip-Flops 69 ist an den anderen Eingang des dritten UND-Gliedes 70 angelegt.

Schließlich sind noch die Rückstelleingänge R des Zählers 68 und des D-Flip-Flops 69 mit dem Ausgang Q der bistabilen Kippstufe 38 verbunden.

Die beschriebene Kraftfahrzeugbremsanlage arbeitet unter Verwendung der Steuerschaltung 26 nach Fig. 5 wie folgt.

Sobald das Fahrzeug bis zum Stillstand abgebremst und das Kupplungspedal 29 vollständig getreten ist, liefern der Signalgeber 55 und der Kupplungsschalter 28 jeweils ein Signal mit H-Potential an das erste UND-Glied 54, dessen Ausgang ebenfalls H-Potential annimmt, so daß ein Setzsignal an den Setzeingang S der bistabilen Kippstufe 38 anliegt. Damit wird die bistabile Kippstufe 38 gesetzt, so daß an ihrem Ausgang Q ebenfalls ein Signal mit H-Potential anliegt, das über das ODER-Glied 57 zur Erregung der Relaisspule 22' weitergeleitet wird. Daraufhin zieht das Relais 22 an, so daß der Elektromagnet 19 erregt wird und das Schaltventil 17 sperrt. Der in den Radbremszylindern der Bremsen 14, 14' herrschende Bremsdruck ist somit gespeichert. Gleichzeitig wird das Ausgangssignal der bistabilen Kippstufe über das ODER-Glied 57 an die Blinkschaltung 58 angelegt, so daß die Kontrollampe 55 angesteuert wird und blinkt. Zustätzlich wird das Ausgangssignal der bistabilen Kippstufe 38 auch noch an die Ruckstelleingänge R des Zählers 68 und des D-Flip-Flops 69 geführt, die dadurch solange in ihrem rückgestellten Zustand gehalten werden, wie das Ausgangssignal der bistabilen Kippstufe 38 H-Potential besitzt.

Wird nun zum Anfahren in einer Steigung ein Gang eingelegt, so liefert zunächst der Leerlaufschalter 51 ein Signal mit H-Potential an das zweite UND-Glied 41, das somit für Impulse vom Schmitt-Trigger 42 durchlässig wird.

Sobald der Fahrer nun das Kupplungspedal langsam losläßt und gleichzeitig zum Anfahren Gas gibt, liegt der vom Kupplungsschalter 28 beaufschlagte Eingang des ersten UND-Gliedes 54 auf L-Potential, so daß das UND-Glied 54 sperrt.

Wird nun während des Anfahrvorganges der Kupplungspunkt erreicht, so daß das Kupplungsmoment so groß wird, daß ein Verdrehen der Antriebswelle des nicht gebremsten Rades gegenüber derjenigen des gebremsten Rades auftreten kann, wobei das Verdrehen durch den Drehstellungsfühler 31 erfaßt wird, so kann das Signal vom Drehstellungsfühler 31 über den Schmitt-Trigger 42 und das zweite UND-Glied 41 an den Rückstelleingang R der bistabilen Kippstufe 38 geführt werden, der dann H-Potential annimmt, so daß das Ausgangssignal der bistabilen Kippstufe L-Potential annimmt. Daraufhin fällt das Relais 22 ab und das Schaltventil 17 öffnet. Gleichzeitig werden der Zähler 68 und das D-Flip-Flop 69 freigegeben.

Am invertierten Ausgang $\bar{Q}$ des D-Flip-Flops 69 liegt ein Signal mit H-Potential an, das an das dritte UND-Glied 70 geführt ist, so daß es für vom Inverter 67 kommende Signale durchlässig ist. Gleichzeitig wird das vom Drehstellungsfühler 31 erzeugte und vom Schmitt-Trigger 42 in ein Rechtecksignal umgeformte Impulssignal an die Zeitstufe 59 angelegt, die über den Inverter 67 ein Signal mit L-Potential an das dritte UND-Glied 70 abgibt. Das Ausgangssignal des dritten ND-Gliedes 70 besitzt somit ebenfalls L-Potential, so daß die Relaisspule 22′ des Relais 22 entregt bleibt.

Sobald die von der Widerstandsschaltung 60 oder dem veränderbaren Widerstand 61 eingestellte Verzögerungszeit der Zeitstufe 59 abgelaufen ist, fällt der Ausgang der Zeitstufe 59 auf L-Potential, so daß der Inverter 67 ein Signal mit H-Potential über das durchlässige dritte UND-Glied 70 und das ODER-Glied 57 an die Relaisspule 22 abgibt, so daß das Relais 22 erneut anzieht und damit bewirkt, daß das Schaltventil 17 wieder schließt. Ein weiterer Abbau des Bremsdrucks in den Radbremszylindern der Bremsen 14, 14′ wird somit verhindert bis der Drehstellungsfühler 31 einen weiteren Impuls erzeugt. Sobald dieser weitere Impuls an der Zeitstufe 59 anliegt, wird über den Inverter 67 ein Signal mit L-Potential gebildet, das über das dritte UND-Glied 70 und das ODER-Glied 57 dem Relais 22 zugeführt wird, das nun erneut abfällt und somit einen weiteren Abbau des Bremsdrucks in den Radbremszylindern der Bremsen 14, 14′ ermöglicht. Gleichzeitig wird der Impuls des Drehstellungsfühlers 31 vom Zähler 68 gezählt.

Dieser beschriebene Vorgang wiederholt sich, bis z.B. nach sieben Impulsen der Zähler 68 ein Setzsignal mit H-Potential an das D-Flip-Flop 69 abgibt, so daß dieses gesetzt ist. Damit nimmt der invertierte Ausgang $\bar{Q}$ des D-Flip-Flops 69 L-Potential an, das an das dritte UND-Glied 70 der Steuerschaltung 26 geführt ist, so daß das UND-Glied 70 sperrt und an seinem Ausgang ständig ein Signal mit L-Potential vorliegt. Das Relais 22 bleibt somit ständig abgefallen und damit ist die Bremsdruckhaltevorrichtung 16 abgeschaltet.

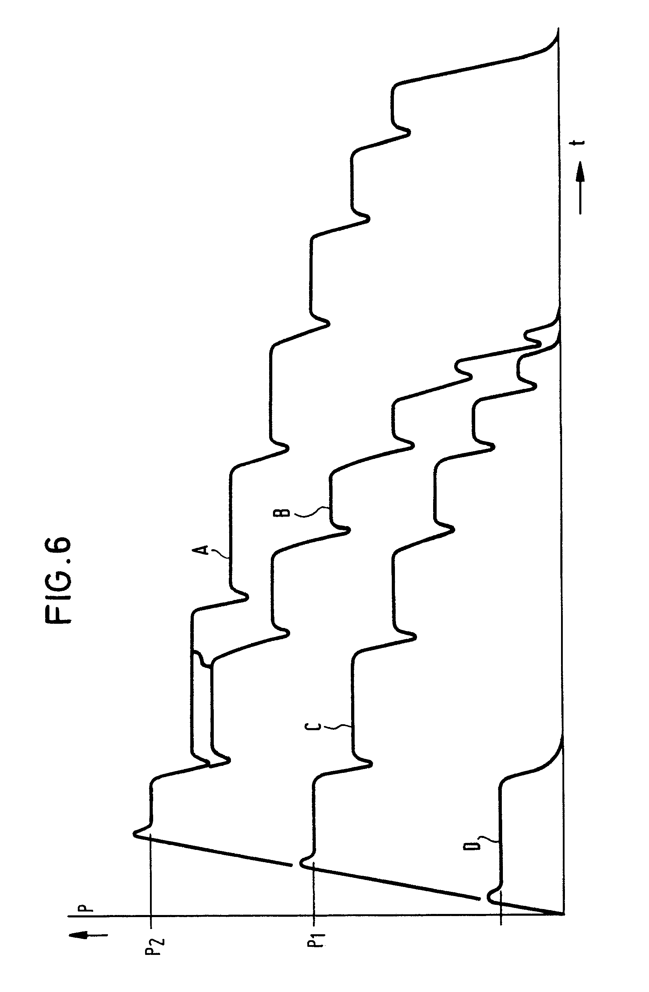

Anhand von Fig. 6, in der der in den Radbremszylindern der Bremsen 14, 14′ des ersten Bremskreises 12 vorliegende Bremsdruck p in Abhängigkeit von der Zeit t aufgetragen ist, wird die Funktion der Veränderung der Impulslänge, die durch die Zeitstufe 68 erreicht wird, näher erläutert.

Wird das Fahrzeug in einer mittleren Steigung angehalten, so liegt in den entsprechenden Radbremszylindern ein Bremsdruck p1 vor, der durch die Bremsdruckhaltevorrichtung 16 gespeichert ist. Die Kurve C zeigt schematisch den Verlauf des Druckabfalls von p1 auf Null. Beim Auftreten des ersten vom Drehstellungsfühler 31 erzeugten Impulses wird die Bremsdruckhaltevorrichtung 16 - wie oben beschrieben - für eine von der Zeitstufe 59 erzeugte Zeitdauer abgeschaltet, so daß der Bremsdruck in den Radbremszylindern des ersten Bremskreises 12 um einen bestimmten Betrag abfallen kann. Wird nun wie im Ausführungsbeispiel nach Fig. 5 gezeigt, durch Parallelschaltung der Widerstände 62, 63 eine kurze Verzögerungszeit für die Zeitstufe 59 gewählt, so wird die Bremsdruckhaltevorrichtung 16 nach dieser kurzen Verzögerungszeit wieder eingeschaltet und der Bremsdruck wird bis zum Auftreten des zweiten Impulses im wesentlichen konstant gehalten. Der Druck wird dann in weiteren Stufen schrittweise abgebaut. Durch die geringer werdende Bremskraft und die in immer kurzerer Zeitfolge auftretenden Impulse vom Drehstellungfühler 31 ergibt sich beim zügigen Anfahren somit eine abfallende Kurve.

Wird das Fahrzeug nun in einer steileren Steigung angehalten, so liegt in den Radbremszylindern des ersten Bremskreises 12 ein sehr viel höherer Bremsdruck p2 vor. Die Kurve A zeigt nun den Verlauf des Druckabbaus bei gleicher Zeitverzögerung durch die Zeitstufe 59. Weil das Fahrzeug hierbei gegen die größere Steigung und die zunächst höhere Bremskraft bewegt werden muß, treten die Impulse vom Drehstellungsfühler 31 in größeren Zeitabständen hintereinander auf, so daß das Anfahren hier zwangsweise über einen längeren Zeitraum stattfindet. Auch hierbei ist es wichtig, daß parallel zu einem allmählichen Bremsdruckabbau und einer daraus resultierenden Bremskraftabnahme ein entsprechendes Anfahrmoment von der Fahrzeugkupplung erzeugt werden kann.

Nach dem 7. vom Zähler 68 gezählten Impuls bewirkt dieser, daß das Schaltventil 17 ständig geöffnet bleibt, so daß die Bremsen 14, 14' dann freigegeben werden.
Wird nun für den Fall, daß das Fahrzeug in einer großen Steigung mit einem Bremsdruck p2 gehalten werden muß die von der Zeitstufe 59 bewirkte Zeitverzögerung vergrößert, so ergibt sich ein Druckabbau entsprechend der Kurve B in Fig. 6.

Die vergrößerte Zeitverzögerung kann z.B. dadurch erreicht werden, daß bei Verwendung einer Widerstandsschaltung 60 der eine Neigungsschalter 65 so eingestellt ist, daß er ab einer bestimmten Steigung öffnet. Somit ist dann nur noch der Widerstand 62, dessen Widerstandswert größer ist, als der Widerstandswert der parallel geschalteten Widerstände 62, 63, an die Zeitstufe 59 angeschlossen, wodurch eine verlängerte Zeitverzögerung bewirkt wird.

Die Vergrößerung des an die Zeitstufe 59 angeschlossenen Widerstandes kann jedoch beispielsweise auch dadurch erreicht werden, daß der veränderbare Widerstand 61 so von einem Neigungsschalter 66 kontinuierlich beaufschlagt wird, daß sein Widerstandswert mit zunehmender Steigung größer wird.

Durch die verlängerte Verzögerungszeit wird nun erreicht, daß bei jedem auftretenden Impuls vom Drehstellungsfühler die Bremsdruckhaltevorrichtung 16 länger abgeschaltet bleibt als beispielsweise in einer mittleren Steigung, so daß bei jedem Impuls ein größerer Druckabbau erfolgen kann. Die Kurve B, die den Druckabbau beim Anfahren in einer großen Steigung mit einer verlängerten Verzögerungszeit der Zeitstufe 59 schematisch darstellt, ist somit besser an den Anfahrvorgang angepaßt.

Die beiden Neigungsschalter 64, 65 sind bei Verwendung der Widerstandsschaltung 60 nun so eingestellt, daß sie, wenn sich das Fahrzeug in einer Ebene befindet, beide geöffnet sind. Hierdurch ist der an der Widerstandsstufe 69 anliegende Widerstand praktisch unendlich, woraus sich eine praktisch endlos lange Verzögerungszeit für die Zeitstufe 59 ergibt. Somit bleibt die Bremsdruckhaltevorrichtung 16 bereits nach dem ersten auftretenden Impulse ständig geöffnet. Der Druckverlauf für ein in der Ebene angehaltenes Kraftfahrzeug ist in Fig. 6 durch die Kurve D dargestellt.

Für den Fall, daß die zeitliche Auflösung des Drehstellungsfühlers 31 der Fühlervorrichtung 30 hinsichtlich der Anzahl der Impulse nicht fein genug ist, kann durch mehrmaliges Pulsen des Schaltventils 17 zwischen den einzelnen von der Fühlervorrichtung 30 gelieferten Impulsen ein gleichmäßigeres Abfallen des Bremsdruckes in den Radbremszylindern der Bremsen 14, 14' des ersten Bremskreises 12 erzeugt werden.

## Patentansprüche

1. Kraftfahrzeugbremsanlage mit einem von einem Bremspedal (11) beaufschlagten Hauptbremszylinder (10), an den zu den Radbremszylindern führende Bremskreise (12, 13) angeschlossen sind, mit einer zwischen dem Hauptbremszylinder und zumindest einem der Radbremszylinder in einem der Bremskreise (12, 13) angeordneten elektromagnetisch betätigbaren Bremsdruckhaltevorrichtung (16) und mit einer Steuerschaltung (26) zum Betätigen der Bremsdruckhaltevorrichtung (16), die einen mittels eines Kupplungspedals (29) betätigbaren Kupplungsschalter (28) aufweist, der bei betätigtem Kupplungspedal (29) das Einschalten der Bremsdruckhaltevorrichtung (16) ermöglicht, dadurch **gekennzeichnet,** daß an die Steuerschaltung (26) eine an eine Antriebswelle (33) eines von der Bremsdruckhaltevorrichtung (16) nicht gebremsten Rades angeordnete Fühlervorrichtung (30) mit einem die Drehstellung der Antriebswelle (33) des nicht gebremsten Fahrzeugrades erfassenden Drehstellungsfühler (31) angeschlossen ist, die ein eine Veränderung der Drehstellung der Antriebswelle (33) anzeigendes Signal an die Steuerschaltung (26) abgibt, um ein Abschalten der Bremsdruckhaltevorrichtung (16) zu bewirken.

2. Kraftfahrzeugbremsanlage nach Anspruch 1, dadurch **gekennzeichnet,** daß der Kupplungsschalter (28) der Steuerschaltung (26) ein vom Kupplungspunkt unabhängiger Endschalter ist.

3. Kraftfahrzeugbremanlage nach Anspruch 1 oder 2, dadurch **gekennzeichnet,** daß die Steuerschaltung (26) eine bistabile Kippstufe (38) aufweist, deren Setzeingang (S) an den Kupplungsschalter (28) angeschlossen ist und deren Ausgangssignal die Bremsdruckhaltevorrichtung (16) beaufschlagt.

4. Kraftfahrzeugbremsanlage nach Anspruch 1 bis 3, dadurch **gekennzeichnet,** daß an den Rückstelleingang (R) der bistabilen Kippstufe (38) das Ausgangssignal der Fühlervorrichtung (30) angelegt ist.

5. Kraftfahrzeugbremsanlage nach einem der vorhergehenden Ansprüche, dadurch **gekennzeichnet,** daß die Steuerschaltung (26) ein vom Kupplungsschalter (28) beaufschlagtes Zeitverzögerungsglied (40) aufweist, das die Weiterleitung der Signale der Fühlervorrichtung (30) an die bistabile Kippstufe (38) steuert.

6. Kraftfahrzeugbremsanlage nach Anspruch 5, dadurch **gekennzeichnet,** daß das Zeitverzögerungsglied (40) ein Zeitfenster erzeugt.

7. Kraftfahrzeugbremsanlage nach Anspruch 6, dadurch **gekennzeichnet,** daß das Zeitfenster ein bis zehn Sekunden, insbesondere vier Sekunden beträgt.

8. Kraftfahrzeugbremsanlage nach einem der vorhergehenden Ansprüche, dadurch **gekennzeichnet,** daß die Steuerschaltung (26) einen Schmitt-Trigger (42) aufweist, an dessen Eingang der Ausgang des Drehstellungsfühlers (31) der Fühlervorrichtung (30) angeschlossen ist.

9. Kraftfahrzeugbremsanlage nach einem der Ansprüche 5 bis 8, dadurch **gekennzeichnet,** daß die Steuerschaltung (26) ein zweites Zeitverzögerungsglied (39) aufweist, das dem ersten Zeitverzögerungsglied (40) nachgeordnet ist.

10. Kraftfahrzeugbremsanlage nach einem der vorhergehenden Ansprüche, dadurch **gekennzeichnet,** daß die Steuerschaltung (26) von einer Sicherheitsschaltung (34) beaufschlagt ist, die bei ausgeschalteter Zündung und nicht betätigter Handbremse die Steuerschaltung (26) unmittelbar mit einer Kraftfahrzeugbatterie verbindet.

11. Kraftfahrzeugbremsanlage nach Anspruch 10, dadurch **gekennzeichnet,** daß an die Sicherheitsschaltung (34) ein Türkontaktschalter (36) angeschlossen ist, der einen Warnsignalgeber (37) beaufschlagt.

12. Kraftfahrzeugbremsanlage nach Anspruch 11, dadurch **gekennzeichnet,** daß als Warnsignalgeber ein akkustischer Summer (37) vorgesehen ist.

13. Kraftfahrzeugbremsanlage nach einem der vorhergehenden Ansprüche, dadurch **gekennzeichnet,** daß an die Steuerschaltung (26) ein Leerlaufschalter (51) angeschlossen ist, der ein die Weiterleitung der Impulse der Fühlervorrichtung (30) steuerndes Schaltglied (40; 41) beaufschlagt.

14. Kraftfahrzeugbremsanlage nach Anspruch 13, dadurch **gekennzeichnet,** daß der Leerlaufschalter (51) an das Zeitverzögerungsglied (40) angeschlossen ist.

15. Kraftfahrzeugbremsanlage nach Anspruch 13, dadurch **gekennzeichnet,** daß der Leerlaufschalter (51) an einem Eingang eines UND-Gliedes (41) angeschlossen ist, an dessen anderen Eingang die Signale der Fühlervorrichtung (30) angelegt sind.

16. Kraftfahrzeugbremsanlage nach einem der vorhergehenden Ansprüche, dadurch **gekennzeichnet,** daß an die steuerschaltung (26) ein auf die Fahrzeuggeschwindigkeit ansprechender Signalgeber (55) vorgesehen ist, dessen Ausgang an einen Eingang eines UND-Gliedes (54) angelegt ist, an dessen zumindest einen anderen Eingang der Kupplungsschalter (28) angeschlossen ist.

17. Kraftfahrzeugbremsanlage nach einem der vorhergehenden Ansprüche, dadurch **gekennzeichnet,** daß eine das Lösen der Bremsdruckhaltevorrichtung (16) nur bei annähernd still stehendem Fahrzeug ermöglichende, bei Ausfall der Fühlervorrichtung (30) wirksame sicherheitsschaltung vorgesehen ist.

18. Kraftfahrzeugbremsanlage nach einem der vorhergehenden Ansprüche, dadurch **gekennzeichnet,** daß die Steuerschaltung einen Neigungsschalter (52) umfaßt, der bei in Anfahrrichtung bergab geneigtem Fahrzeug geöffnet, ansonsten geschlossen ist.

19. Kraftfahrzeugbremsanlage nach Anspruch 18, dadurch **gekennzeichnet,** daß parallel zum Neigungsschalter (52) ein Rückwärtsgangschalter (53) geschaltet ist, der bei eingelegtem Rückwärtsgang geschlossen, ansonsten geöffnet ist.

20. Kraftfahrzeugbremsanlage nach einem der Ansprüche 1 bis 17,

dadurch **gekennzeichnet,** daß die Steuerschaltung (26) eine Impulshalteschaltung (59, 67, 68, 69, 70) umfaßt, an die das Ausgangssignal der Fühlervorrichtung (30) angelegt ist und deren Ausgangssignal über ein Verknüpfungsglied (57), dessen anderer Eingang mit dem Ausgang der bistabilen Kippstufe (38) verbunden ist, die Bremsdruckhaltevorrichtung (16) beaufschlagt.

21. Kraftfahrzeugbremsanlage nach Anspruch 20, dadurch **gekennzeichnet,** daß das Verknüpfungsglied von einem ODER-Glied (57) gebildet ist.

22. Kraftfahrzeugbremsanlage nach Anspruch 20 oder 21, dadurch **gekennzeichnet,** daß die Impulshalteschaltung eine vom Ausgangssignal der Fühlervorrichtung (30) beaufschlagte, eine Haltezeit festlegende Zeitstufe (59) aufweist, deren Ausgangssignal über einen Inverter (67) an das ODER-Glied (57) geführt ist.

23. Kraftfahrzeugbremsanlage nach Anspruch 20, 21 oder 22, dadurch **gekennzeichnet,** daß die Impulshalteschaltung einen vom Ausgangssignal der Fühlervorrichtung (30) beaufschlagten Zähler (68) aufweist, der nach einer vorgebbaren Anzahl von Impulsen den Ausgang der Impulshalteschaltung sperrt.

24. Kraftfahrzeugbremsanlage nach einem der Ansprüche 20 bis 23, dadurch **gekennzeichnet,** daß ein Ausgang (Q7) des Zählers (68) zum Sperren des Ausgangs der Impulshalteschaltung an eine Torschaltung (70) angelegt ist, deren anderer Eingang vom Inverter (67) beaufschlagt ist und deren Ausgang den Ausgang der Impulshalteschaltung bildet.

25. Kraftfahrzeugbremsanlage nach Anspruch 24, dadurch **gekennzeichnet,** daß die Torschaltung von einem UND-Glied (70) gebildet ist.

26. Kraftfahrzeugbremsanlage nach Anspruch 24 oder 25, dadurch **gekennzeichnet,** daß an den Ausgang (Q7) des Zählers (68) der Setzeingang eines D-Flip-Flops (69) angeschlossen ist, dessen invertierter Ausgang ($\overline{Q}$) an das UND-Glied (70) angelegt ist.

27. Kraftfahrzeugbremsanlage nach einem der Ansprüche 20 bis 26, dadurch **gekennzeichnet,** daß das Ausgangssignal der bistabilen Kippstufe (38) an die Impulshalteschaltung (59, 67, 68, 69, 70) angelegt ist.

28. Kraftfahrzeugbremsanlage nach Anspruch 23 bis 27, dadurch **gekennzeichnet,** daß das Ausgangssignal der bistabilen Kippstufe (38) an Rückstelleingänge (R) des Zählers (68) und des D-Flip-Flops (69) angelegt ist.

29. Kraftfahrzeugbremsanlage nach Anspruch 22 bis 27, dadurch **gekennzeichnet,** daß zum Einstellen der Haltezeit an die Zeitstufe (59) eine Widerstandsschaltung (60) angeschlossen ist.

30. Kraftfahrzeugbremsanlage nach Anspruch 29, dadurch **gekennzeichnet,** daß die Widerstandsschaltung (60) zwei zueinander parallel geschaltete Widerstände (62, 63) umfaßt, wobei mit zumindest einem der Widerstände (62; 63) ein Neigungsschalter (64 bzw. 65) in Reihe geschaltet ist.

31. Kraftfahrzeugbremsanlage nach Anspruch 30, dadurch **gekennzeichnet,** daß in Reihe mit jedem der beiden Widerstände (62; 63) ein Neigungsschalter (64 bzw. 65) geschaltet ist.

32. Kraftfahrzeugbremsanlage nach Anspruch 22 bis 28, dadurch **gekennzeichnet,** daß zum Einstellen der Haltezeit an die Zeitstufe (59) ein veränderlicher Widerstand (61) angeschlossen ist, der von einem kontinuierlich verstellbaren Neigungsschalter (66) beaufschlagt ist.

## Claims

1. Motor vehicle brake system with a main brake cylinder (10), operated by a brake pedal (11), to which are connected brake circuits (12, 13) leading to the wheel brake cylinders, with an electromagnetically operated brake pressure retaining device (16) arranged between the main brake cylinder and at least one of the wheel brake cylinders in one of the brake circuits (12, 13), and with a control circuit (26) for operating the brake pressure retaining device (16) which has a linked switch (28), operated by a linked pedal (29), which enables the brake pressure retaining device (16) to be engaged when the linked pedal (29) is operated, characterised in that connected to the control circuit (26) is a sensing device (30), arranged on a drive shaft (33) of a wheel not braked by the brake pressure retaining device (16), which is connected to a rotary position sensor (31) which determines the rotary position of the drive shaft (33) of the vehicle wheel not braked, which rotary position sensor delivers to the control circuit (26) a signal indicating a change in the rotary position of the drive shaft (33) in order to cause the brake pressure retaining device (16) to be switched off.

2. Motor vehicle brake system according to claim 1,
characterised in that the linked switch (28) of the control circuit (26) is a limit switch operating independently of the linked point.

3. Motor vehicle brake system according to claim 1 or 2,
characterised
in that the control circuit (26) has a bistable flip-flop (38) whose set input (S) is connected to the linked switch (28) and whose output signal is applied to the brake pressure retaining device (16).

4. Motor vehicle brake system according to claim 1 to 3,
characterised
in that the output signal of the sensing device (30) is applied to the reset input (R) of the bistable flip-flop (38).

5. Motor vehicle brake system according to one of the preceding claims,
characterised
in that the control circuit (26) has a time delay element (40) operated by linked switch (28).

6. Motor vehicle brake system according to claim 5,
characterised
in that the time delay element (40) produces a time aperture.

7. Motor vehicle brake system according to claim 6,
characterised
in that the time aperture is of one to ten second duration, preferably four seconds.

8. Motor vehicle brake system according to one of the preceding claims,
characterised

in that the control circuit (26) has a Schmitt-trigger (42) to the input of which is connected the output of the rotary position sensor (31) of the sensing device (30).

9. Motor vehicle brake system according to one of the claims 5 to 8,
characterised
in that the control circuit (26) has a second time delay element (39) which is connected in series with the first time delay element (40).

10. Motor vehicle brake system according to one of the preceding claims,
characterised
in that the control circuit (26) is acted upon by a safety circuit (34) which directly connects the control circuit (26) to a motor vehicle battery when the ignition is turned off and the hand brake is not operated.

11. Motor vehicle brake system according to claim 10,
characterised in that to the safety circuit (34) is connected a door contact switch (36) which acts upon a warning signal generator (37).

12. Motor vehicle brake system according to claim 11,
characterised in that the warning signal generator is an acoustic buzzer (37).

13. Motor vehicle brake system according to one of the preceding claims,
characterised
in that to the control circuit (26) is connected an idling switch (51) which acts upon a control element (40; 41) for controlling the routing of the pulses of the sensing device (30).

14. Motor vehicle brake system according to claim 13,
characterised
in that the idling switch (51) is connected to the time delay element (40).

15. Motor vehicle brake system according to claim 13,
characterised
in that the idling switch (51) is connected to the input of an AND element (41) to the other input of which are applied the signals of the sensing device (30).

16. Motor vehicle brake system according to one of the preceding claims,
characterised
in that for the control circuit (26) is provided a transducer (55), responsive to the speed of the motor vehicle, whose output is applied to an input of an AND element (54) to which is connected at least the one other input of the linked switch (28).

17. Motor vehicle brake system according to one of the preceding claims, characterised in that a safety circuit is provided which becomes effective when the sensing device (30) fails, enabling the brake pressure retaining device (16) to be released only when the vehicle is almost at a standstill.

18. Motor vehicle brake system according to one of the preceding claims, characterised in that the conrol circuit includes a tilt switch (52) which is open when the vehicle is tilted downhill in the starting direction, but is closed otherwise.

19. Motor vehicle brake system according to claim 18, characterised in that in parallel with the tilt switch (52) is connected a reversing gear switch (53) which is closed when the reversing gear is engaged, but is open any other time.

20. Motor vehicle brake system according to one of the claims 1 to 17, characterised in that the control circuit (26) includes a pulse retaining circuit (59, 67, 68, 69, 70) to which is applied the output signal of the sensing device (30) and whose output signal via a logic element (57) whose other input is connected to the output of the bistable flip-flop (38), acts upon the brake pressure retaining device (16).

21. Motor vehicle brake system according to claim 20, characterised in that the logic element constitutes an OR element (57).

22. Motor vehicle brake system according to claim 20 or 21, characterised in that the pulse retaining circuit has a time stage (59), for fixing the stop time, which is acted upon by the output signal of the sensing device (30), whose output signal is supplied via an inverter (67) to the OR element (57).

23. Motor vehicle brake system according to claim 20, 21 or 22, characterised in that the pulse retaining circuit has a meter (68), which is acted upon by an output signal of the sensing device (30), which after a predetermined number of pulses blocks the output of the pulse retaining circuit.

24. Motor vehicle brake system according to one of the claims 20 to 23, characterised in that for blocking the output of the pulse retaining circuit, an output (Q7) of the meter (68) is applied to a gate circuit (70) whose other input is acted upon by the inverter (67) and whose output forms the output of the pulse retaining circuit.

25. Motor vehicle brake system according to claim 24, characterised in that the gate circuit is formed by an AND element (70).

26. Motor vehicle brake system according to claim 24 or 25, characterised in that to the output (Q7) of the meter (68) is connected the setting input of a D-flipflop (69) whose inverted output (Q) is applied to the AND element (70).

27. Motor vehicle brake system according to one of the claims 20 to 26, characterised in that the output signal of the bistable flipflop (38) is applied to the pulse retaining circuit (59, 67, 68, 69, 70).

28. Motor vehicle brake system according to claim 23 to 27, characterised in that the output signal of the bistable flipflop (38) is applied to the reset inputs (R) of the meter (68) and the D-flipflop (69).

29. Motor vehicle brake system according to claim 22 to 27, characterised in that a resistance circuit (60) is connected to the time stage (59) for adjusting the stop time.

30. Motor vehicle brake system according to claim 29, characterised in that the resistance circuit (60) includes two resistances (62, 63) connected in parallel with each other, in which a tilt switch (64 or 65) is connected in series with at least one of the resistances (62; 63).

31. Motor vehicle brake system according to claim 30,
characterised
in that a tilt switch (64 or 65) is connected in series with each of the two resistances (62; 63).

32. Motor vehicle brake system according to claim 22 to 28,
characterised
in that the hold time is adjusted by connecting to the time stage (59) a variable resistance (61) which is acted upon by a continuously adjustable tilt switch (66).

**Revendications**

1. Installation de freinage de véhicule automobile comportant un maître-cylindre de frein (10) commandé par une pédale de frein (11) auquel sont reliés des circuits de freinage (12, 13) menant au cylindres de freins de roues, un dispositif de maintien de la pression de freinage (16) à commande électro-magnétique disposé entre le maître-cylindre et au moins un des cylindres de frein de roue dans un des circuits de freinage (12, 13) et un circuit de commande (26) commandant le dispositif de maintien de la pression de freinage 16 qui présente un contacteur d'embrayage (28) actionné au moyen d'une pédale d'embrayage (29), qui permet la mise en service du dispositif de maintien de la pression de freinage (16) lorsque la pédale d'embrayage (29) est actionnée, caractérisée en ce qu'un dispositif de capteur (30) monté sur un arbre d'entraînement (33) d'une roue non freinée par le dispositif de maintien de la pression de freinage (16) comportant un capteur de position angulaire (31) enregistrant la position angulaire de l'arbre d'entraînement (33) de la roue du véhicule non freinée est relié au circuit de commande (26) et délivre au circuit de commande (26) un signal indiquant une variation de la position angulaire de l'arbre d'entraînement (33), afin de provoquer une mise hors service du dispositif de maintien de la pression de freinage (16).

2. Installation de freinage de véhicule automobile selon la revendication 1, caractérisée en ce que le contacteur d'embrayage (28) du circuit de commande (26) est un contacteur de fin de course indépendant du point d'embrayage.

3. Installation de freinage de véhicule automobile selon la revendication 1 ou 2, caractérisée en ce que le circuit de commande (26) comporte une bascule bistable (38) dont l'entrée de commande (S) est reliée au contacteur d'embrayage (28) et dont le signal de sortie est appliqué au dispositif de maintien de la pression de freinage (16).

4. Installation de freinage de véhicule automobile selon les revendications 1 à 3, caractérisée en ce que le signal de sortie du dispositif de capteur (30) est appliqué à l'entrée de remise à l'état d'origine (R) de la bascule bistable (38).

5. Installation de freinage de véhicule automobile selon l'une des revendications précédentes, caractérisée en ce que le circuit de commande (26) comporte un élément de retard (40) commandé par le contacteur d'embrayage (28), qui commande la transmission des signaux venant du dispositif de capteur (30) à la bascule bistable (38).

6. Installation de freinage de véhicule automobile selon la revendication 5, caractérisée en ce que l'élément de retard (40) produit une fenêtre de temps.

7. Installation de freinage de véhicule automobile selon la revendication 6, caractérisée en ce que la fenêtre de temps est de 1 à 10 secondes, en particulier 4 secondes.

8. Installation de freinage de véhicule automobile selon l'une des revendications précédentes, caractérisée en ce que le circuit de commande (26) comporte une bascule de Schmitt (42) à l'entrée de laquelle est reliée la sortie du capteur de position angulaire (31) du dispositif de capteur (30).

9. Installation de freinage de véhicule automobile selon l'une des revendications 5 à 8, caractérisée en ce que le circuit de commande (26) comporte un deuxième élément de retard (39) qui est monté derrière le premier élément de retard (40).

10. Installation de freinage de véhicule automobile selon l'une des revendications précédentes, caractérisée en ce que le circuit de commande (26) reçoit des signaux d'un circuit de sécurité (34) qui relie directement le circuit de commande (26) à une batterie du véhicule automobile lorsque l'allumage est coupé et que le frein à main n'est pas actionné.

11. Installation de freinage de véhicule automobile selon la revendication 10, caractérisée en ce qu'un contacteur de porte (36) est relié au circuit de sécurité (34) et commande un transmetteur de signal d'avertissement (37).

12. Installation de freinage de véhicule automobile selon la revendication 11, caractérisée en ce qu'il est prévu comme transmetteur de signal d'avertissement un vibreur acoustique (37).

13. Installation de freinage de véhicule automobile selon l'une des revendications précédentes, caractérisée en ce qu'un contacteur de point mort (51) est relié au circuit de commande (26) et commande un élément de couplage (40, 41) qui commande la transmission des impulsions du dispositif de capteur (30).

14. Installation de freinage de véhicule automobile selon la revendication 13, caractérisée en ce que le contacteur de point mort (51) est relié à l'élément de retard (40).

15. Installation de freinage de véhicule automobile selon la revendication 13, caractérisée en ce que le contacteur de point mort (51) est relié à une entrée d'un élément -ET 41, à l'autre entrée duquel sont appliqués les signaux du dispositif de capteur 30.

16. Installation de freinage de véhicule automobile selon l'une des revendications précédentes, caractérisée en ce qu'il est prévu dans le circuit de commande (26) un transmetteur de signal (55) réagissant à la vitesse du véhicule, dont la sortie est reliée à une entrée d'un élément -ET 54 et à l'autre entrée duquel, au nombre d'au moins une, est relié le contacteur d'embrayage (28).

17. Installation de freinage de véhicule automobile selon l'une des revendications précédentes, caractérisée en ce qu'il est prévu un circuit de sécurité agissant en cas de défaillance du dispositif de capteur (30) et ne permettant le desserrage du dispositif de maintien de la pression de freinage (16) que lorsque le véhicule est pratiquement à l'arrêt.

18. Installation de freinage de véhicule automobile selon l'une des revendications précédentes, caractérisée en ce que le circuit de commande comporte un contacteur d'inclinaison (52) qui est ouvert lorsque le véhicule est incliné dans la direction de déplacement dans le sens de la pente, et est fermé autrement.

19. Installation de freinage de véhicule automobile selon la revendication 18, caractérisée en ce qu'un contacteur de marche arrière (53) est branché en parallèle avec le contacteur d'inclinaison (52), et est fermé lorsque la marche arrière est engagée et est ouvert dans les autres cas.

20. Installation de freinage de véhicule automobile selon l'une des revendications 1 à 17, caractérisée en ce que le circuit de commande (26) comporte un circuit de maintien d'impulsion (59, 67, 68, 69, 70) auquel est appliqué le signal de sortie du dispositif de capteur (30) et dont le signal de sortie commande le dispositif de maintien de la pression de freinage (16) par l'intermédiaire d'un élément logique (57) dont l'autre entrée est reliée à la sortie de la bascule bistable (38).

21. Installation de freinage de véhicule automobile selon la revendication 20, caractérisée en ce que l'élément logique est constitué d'un élément -OU (57).

22. Installation de freinage de véhicule automobile selon la revendication 20 ou 21, caractérisée en ce que le circuit de maintien d'impulsion comporte un élément de retard (59) déterminant un temps de maintien qui est commandé par le signal de sortie du dispositif de capteur (30), et dont le signal de sortie est amené à l'élément -OU (57) par l'intermédiaire d'un inverseur (67).

23. Installation de freinage de véhicule automobile selon la revendication 20, 21 ou 22, caractérisée en ce que le circuit de maintien d'impulsion comporte un compteur (68) commandé par le signal de sortie du dispositif de capteur (30) qui bloque la sortie du circuit de maintien d'impulsion après un nombre prédéterminé d'impulsions.

24. Installation de freinage de véhicule automobile selon l'une des revendications 20 à 23, caractérisée en ce qu'une sortie (Q7) du compteur (68) est reliée à un circuit porte (70) pour le blocage de la sortie du circuit de maintien d'impulsion, dont l'autre entrée est commandée par l'inverseur (67) et dont la sortie constitue la sortie du circuit de maintien d'impulsion.

25. Installation de freinage de véhicule automobile selon la revendication 24, caractérisée en ce que le circuit porte est constitué d'un élément -ET (70).

**26.** Installation de freinage de véhicule automobile selon la revendication 24 ou 25, caractérisée en ce que l'entrée de commande d'une bascule -D (69) est reliée à la sortie (Q7) du compteur (68), et la sortie inversée $\overline{Q}$ de celle-ci est reliée à l'élément -ET (70).

**27.** Installation de freinage de véhicule automobile selon l'une des revendications 20 à 26, caractérisée en ce que le signal de sortie de la bascule bistable (38) est appliqué au circuit de maintien d'impulsion (59, 67, 68, 69, 70).

**28.** Installation de freinage de véhicule automobile selon les revendications 23 à 27, caractérisée en ce que le signal de sortie de la bascule bistable (38) est appliqué aux entrées de remise à l'état d'origine (R) du compteur (68) et de la bascule -D (69).

**29.** Installation de freinage de véhicule automobile selon les revendications 22 à 27, caractérisée en ce qu'un circuit de résistance (60) est relié à l'élément de retard (69) pour le réglage du temps de maintien.

**30.** Installation de freinage de véhicule automobile selon la revendication 29, caractérisée en ce que le circuit de résistance (60) comporte deux résistances (62, 63) montées en parallèle, un contacteur d'inclinaison (64 ou 65) étant monté en série avec au moins une des résistances (62, 63).

**31.** Installation de freinage de véhicule automobile selon la revendication 30, caractérisée en ce qu'un contacteur d'inclinaison (64 ou 65) est monté en série avec chacune des deux résistances (62, 63).

**32.** Installation de freinage de véhicule automobile selon les revendications 22 à 28, caractérisée en ce qu'une résistance variable (61) est reliée à l'élément de retard (59) pour le réglage du temps de maintien, et est commandée par un contacteur d'inclinaison (66) à réglage continu.

FIG.1

# FIG.2

FIG.3

EP 0 251 156 B1

# FIG.4

EP 0 251 156 B1

FIG.5

FIG.6

EP 0 251 156 B1